# DEMANDE DE BREVET EUROPEEN

(11) **EP 3 543 140 A1**
(43) Date de publication de la demande: **25.09.2019**
(21) Numéro de dépôt: 19159401.9
(22) Date de dépôt: 26.02.2019
(51) Int. Cl.: B64D 29/06

(54) **CARENAGE AVANT D'UN MÂT D'AERONEF COMPRENANT UNE COIFFE MOBILE ET AERONEF EQUIPE DUDIT CARENAGE AVANT**

(30) Priorité: 22.03.2018 FR 1852459
(71) Demandeur: Airbus Operations S.A.S., 31060 Toulouse (FR)
(72) Inventeur: THERON, Thierry, 31770 COLOMIERS (FR)
(74) Mandataire: Sarraméa, Claude

(57) **Abrégé**

L'invention a pour objet un carénage avant d'un mât d'un aéronef comprenant une coiffe (62), réalisée d'un seul tenant, qui s'étend sur quasiment toute la superficie du carénage avant et qui est configurée pour occuper une position fermée dans laquelle un bord périphérique (76) de la coiffe (62) et un bord périphérique (78) du carénage avant et/ou de la nacelle (46) sont jointifs, et une position ouverte dans laquelle le bord périphérique (76) de la coiffe (62) est, au moins partiellement, écarté du bord périphérique (78) du carénage avant et/ou de la nacelle (46), le carénage avant comprenant au moins un système de verrouillage pour maintenir la coiffe (62) en position fermée.

## Description

La présente demande se rapporte à un carénage avant d'un mât d'aéronef comprenant une coiffe mobile ainsi qu'à un aéronef équipé dudit carénage avant.

Selon une configuration, un aéronef 10 comprend plusieurs ensembles moteurs 12 positionnés sous la voilure 14.

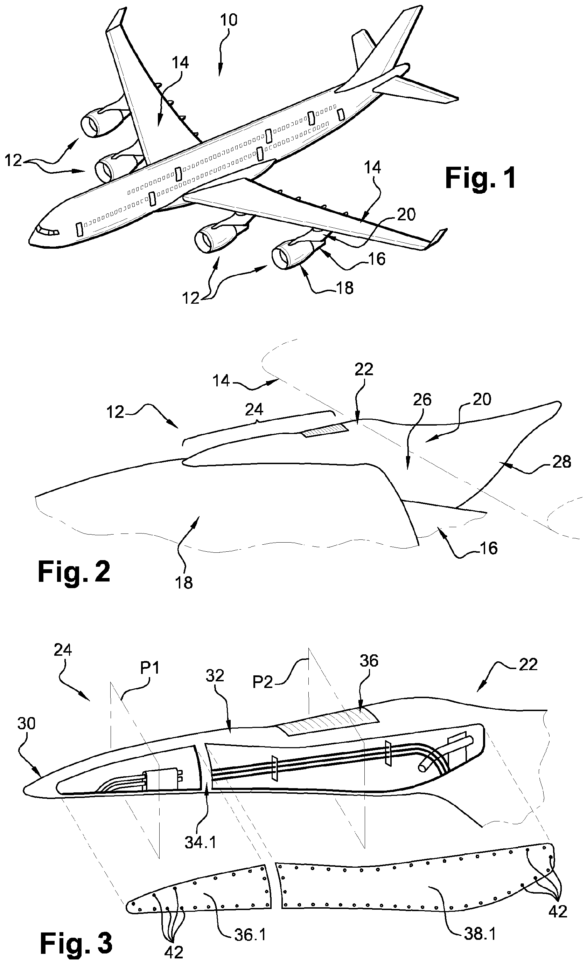

Comme illustré sur les figures 1 et 2, un ensemble moteur 12 comprend :
- un moteur 16 dans lequel circule un flux d'air primaire,
- une nacelle 18 positionnée autour du moteur 16 de manière à délimiter avec ce dernier un conduit annulaire dans lequel s'écoule un flux d'air secondaire, et
- un mât 20 qui assure la liaison entre le moteur 16 et la voilure 14.

Le mât 20 comprend une structure primaire rigide, qui assure entre autres la transmission des efforts entre le moteur 16 et la voilure 14, et une structure secondaire 22 qui enveloppe la structure primaire et qui limite la traînée du mât 20.

Cette structure secondaire 22 comprend un carénage avant 24, positionné à l'avant de la voilure 14, un carénage central 26, positionné sous la voilure 14 et au droit de la nacelle 18, ainsi qu'un carénage arrière 28 appelé carénage aérodynamique arrière inférieur ou APF (« Aft Pylon Fairing » en anglais), positionné à l'arrière de la nacelle 18.

Pour la présente demande, une direction longitudinale est parallèle à l'axe du moteur 16.

Les termes avant et arrière font référence au sens d'écoulement du flux d'air primaire dans le moteur en fonctionnement, le flux d'air primaire pénétrant dans le moteur à l'avant et sortant du moteur à l'arrière.

Les termes supérieur et inférieur font référence à une position selon un axe vertical, un élément supérieur étant plus écarté du sol qu'un élément inférieur lorsque l'aéronef est au sol.

Selon un mode de réalisation, visible sur les figures 3 à 5, le carénage avant 24 présente une surface aérodynamique qui comprend une zone avant courbe 30, une zone supérieure 32 dans le prolongement de la zone avant courbe 30 et deux zones latérales droite et gauche 34.1, 34.2 disposées de part et d'autre de la zone supérieure 32.

Le carénage avant 24 comprend une pluralité de panneaux juxtaposés, conformés selon la surface aérodynamique du carénage avant 24 et fixés sur un châssis également appelé sous-structure. L'un de ces panneaux, positionné sur la zone supérieure 32, plus précisément à l'arrière de la zone supérieure 32, présente une grille d'aération 36.

Pour permettre d'accéder à l'intérieur de la structure secondaire, le carénage avant 24 comprend :
- un panneau mobile avant droit 36.1 et un panneau mobile arrière droit 38.1 positionnés sur la zone latérale droite 34.1,
- un panneau mobile avant gauche 36.2 et un panneau mobile arrière gauche 38.2 positionnés sur la zone latérale gauche 34.2,
- au moins un panneau mobile supérieur 40 positionné dans la zone supérieure 32.

Chacun de ces panneaux mobiles 36.1, 36.2, 38.1, 38.2 et 40 peut être totalement détaché du reste du carénage avant 24. Ainsi, chaque panneau mobile 36.1, 36.2, 38.1, 38.2 et 40 est relié au reste du carénage avant 24 par une pluralité de fixations 42 positionnées sur toute la périphérie du panneau mobile avec un pas de l'ordre de 10 cm.

Par conséquent, lorsqu'un opérateur souhaite accéder à l'intérieur du carénage avant 24, il doit généralement démonter tous les panneaux mobiles 36.1, 36.2, 38.1, 38.2 et 40 et dévisser plus d'une dizaine de fixations 42 (de l'ordre d'une vingtaine) pour chacun d'eux. Durant l'intervention, l'opérateur doit correctement stocker chaque panneau mobile démonté afin de ne pas l'abîmer. Enfin, à l'issue de son intervention, toutes les fixations 42 doivent être revissées. Ainsi, les opérations de démontage et remontage des panneaux mobiles sont relativement longues et fastidieuses.

Le document US2011/127367A1 divulgue un carénage avant d'un mât d'un aéronef présentant une surface aérodynamique qui s'étend entre une nacelle et une aile de l'aéronef, à l'avant de l'aile, et qui comprend une zone avant courbe, une zone supérieure dans le prolongement de la zone avant courbe et deux zones latérales droite et gauche disposées de part et d'autre de la zone supérieure. Le carénage avant comprend un châssis et une coiffe. La coiffe est une unique pièce, réalisée d'un seul tenant, sous la forme d'une paroi qui comprend une portion avant, une portion supérieure, une portion latérale droite et une portion latérale gauche conformées respectivement comme la zone avant courbe, la zone supérieure et les deux zones latérales droite et gauche de la surface aérodynamique du carénage avant. La coiffe est configurée pour occuper une position fermée dans laquelle les bords périphériques de la coiffe et un bord périphérique du carénage avant et de la nacelle sont jointifs, et une position ouverte dans laquelle le bord périphérique de la coiffe est écarté du bord périphérique du carénage avant et de la nacelle. Le carénage avant comprend un système de verrouillage pour maintenir la coiffe en position fermée.

### EXPOSE DE L'INVENTION :

La présente invention vise à remédier aux inconvénients de l'art antérieur.

A cet effet, l'invention a pour objet un carénage avant d'un mât d'un aéronef, présentant une surface aérodynamique qui s'étend entre une nacelle et une aile de l'aéronef, à l'avant de l'aile, et qui comprend une zone avant courbe, une zone supérieure dans le prolongement de la zone avant courbe et deux zones latérales droite et gauche disposées de part et d'autre de la zone supérieure, ledit carénage avant comprenant un châssis et une coiffe.

Le carénage avant est tel que :
- la coiffe est une unique pièce, réalisée d'un seul tenant, sous la forme d'une paroi qui comprend une portion avant, une portion supérieure, une portion latérale droite et une portion latérale gauche conformées respectivement comme la zone avant courbe, la zone supérieure et les deux zones latérales droite et gauche de la surface aérodynamique du carénage avant,
- la coiffe est configurée pour occuper une position fermée dans laquelle un bord périphérique de la coiffe et un bord périphérique du carénage avant et/ou de la nacelle sont jointifs et une position ouverte dans laquelle le bord périphérique de la coiffe est au moins partiellement écarté du bord périphérique du carénage avant et/ou de la nacelle, et
- le carénage avant comprend au moins un système de verrouillage pour maintenir la coiffe en position fermée.

Selon l'invention, le carénage avant se caractérise en ce que la portion supérieure de la coiffe comprend une ouverture et le carénage avant comprend un panneau supérieur, indépendant de la coiffe, solidaire du châssis, présentant une grille d'aération, le panneau supérieur et la coiffe ayant des formes qui coopèrent de manière à assurer une continuité entre la coiffe et le panneau supérieur lorsque la coiffe est en position fermée.

Le fait de prévoir une unique pièce à la place d'une multitude de panneaux permet de réduire le nombre de fixations et donc la durée d'intervention pour accéder aux équipements positionnés sous le carénage avant.

Enfin, cette solution procure une meilleure accessibilité aux équipements positionnés sous le carénage avant lorsque la coiffe est retirée.

Selon un premier mode de réalisation, la coiffe est configurée pour être totalement détachée du châssis en position ouverte.

Selon un deuxième mode de réalisation, le carénage avant comprend au moins une articulation reliant en permanence la coiffe et le châssis, ladite articulation étant configurée pour faire pivoter la coiffe par rapport au châssis autour d'un axe de pivotement entre les positions fermée et ouverte.

Selon une configuration, l'axe de pivotement est orienté selon une direction horizontale, approximativement perpendiculaire à une direction longitudinale et/ou positionné à proximité d'un bord arrière de la coiffe.

Selon une autre caractéristique, le système de verrouillage comprend une pluralité de fixations démontables reliant la coiffe et le châssis pour maintenir la coiffe en position fermée.

L'invention a également pour objet un aéronef comprenant un carénage avant d'un mât selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue d'une structure secondaire d'un mât d'aéronef qui illustre un mode de réalisation,
- La figure 3 est une vue en perspective d'un carénage avant d'une structure secondaire d'un mât d'aéronef qui illustre un mode de réalisation de l'art antérieur,
- La figure 4 est une coupe schématique selon le plan P1 de la figure 3,
- La figure 5 est une coupe schématique selon le plan P2 de la figure 3,
- La figure 6 est une vue en perspective d'un carénage avant d'une structure secondaire d'un mât d'aéronef qui illustre un mode de réalisation de l'invention, ledit carénage avant comportant une coiffe en position fermée,
- La figure 7 est une coupe schématique selon le plan P1 de la figure 6,
- La figure 8 est une coupe schématique selon le plan P2 de la figure 6,
- La figure 9 est une vue en perspective du carénage avant visible sur la figure 6, sa coiffe étant en position ouverte, qui illustre un premier mode de réalisation, et
- La figure 10 est une vue en perspective du carénage avant visible sur la figure 6, sa coiffe étant en position ouverte, qui illustre un deuxième mode de réalisation.

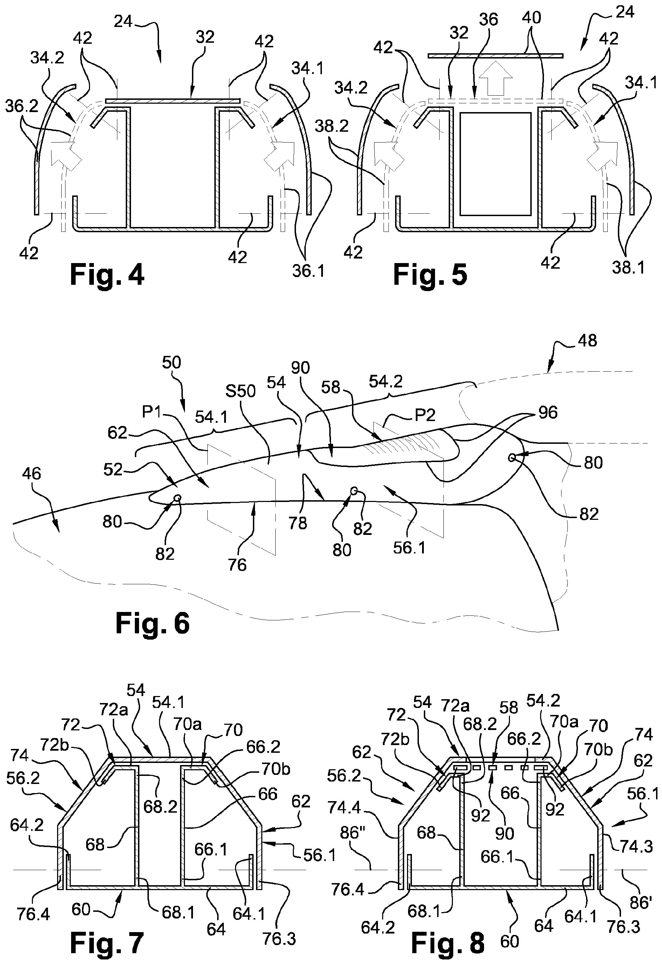

Sur les figures 6 à 10, on a représenté un carénage avant 50 d'une structure secondaire d'un mât d'aéronef.

Sur le plan géométrique, comme illustré sur la figure 6, le carénage avant 50 s'étend entre une nacelle 46 et une aile 48 de l'aéronef, à l'avant de l'aile 48, et présente une surface aérodynamique S50 qui comprend une zone avant courbe 52, une zone supérieure 54 dans le prolongement de la zone avant courbe 52 et deux zones latérales droite et gauche 56.1, 56.2 disposées de part et d'autre de la zone supérieure 54.

La zone supérieure 54 comprend une partie avant 54.1 étroite et une partie arrière 54.2, plus large que la partie avant 54.1, au niveau de laquelle est positionnée une grille d'aération 58. Sur le plan structurel, le carénage avant 50 comprend un châssis 60 (également appelé sous-structure) et une coiffe 62 conformée selon la surface aérodynamique S50 du carénage avant 50, ladite coiffe 62 étant supportée par le châssis 60.

Selon un mode de réalisation illustré par les figures 7 et 8, le châssis 60 comprend :
- une base 64, sensiblement horizontale, qui s'étend de la zone latérale droite 56.1 jusqu'à la zone latérale gauche 56.2 et qui présente un rebord droit 64.1 parallèle à la zone latérale droite 56.1 et un rebord gauche 64.2 parallèle à la zone latérale gauche 56.2,
- des supports droit et gauche 66, 68, sensiblement verticaux, qui s'étendent chacun de la base 64 jusqu'à la zone supérieure 54. Ainsi, chaque support droit ou gauche 66, 68 comprend une extrémité inférieure 66.1, 68.1, reliée à la base 64, et une extrémité supérieure 66.2, 68.2 configurée pour recevoir la coiffe 62.

Selon un mode de réalisation, l'extrémité supérieure 66.2, 68.2 du support droit 66 (respectivement gauche 68) comprend un rebord droit 70 (respectivement gauche 72) qui présente une première partie droite 70a (respectivement gauche 72a), parallèle à la zone supérieure 54, et une deuxième partie droite 70b (respectivement gauche 72b) parallèle à la zone latérale droite 56.1 (respectivement gauche 56.2).

Le rebord droit 64.1 de la base 64 et la deuxième partie 70b du rebord droit 70 du support droit 66 sont espacés pour permettre d'accéder à l'intérieur du carénage avant 50. De la même manière, le rebord gauche 64.2 de la base 64 et la deuxième partie 72b du rebord gauche 72 du support gauche 68 sont espacés pour permettre d'accéder à l'intérieur du carénage avant 50.

La coiffe 62 est une unique pièce, réalisée d'un seul tenant, sous la forme d'une paroi 74 qui comprend une portion avant 74.1, une portion supérieure 74.2, une portion latérale droite 74.3 et une portion latérale gauche 74.4 (visible sur la figure 8) conformées respectivement comme la zone avant courbe 52, la zone supérieure 54 et les deux zones latérales droite et gauche 56.1, 56.2 de la surface aérodynamique S50 du carénage avant 50. La coiffe 62 s'étend sur quasiment toute la surface aérodynamique S50 du carénage avant 50 en position fermée.

La coiffe 62 présente un bord périphérique 76 qui présente un bord avant 76.1, un bord arrière 76.2, un bord latéral droit 76.3 et un bord latéral gauche 76.4 (visible sur les figures 7 et 8).

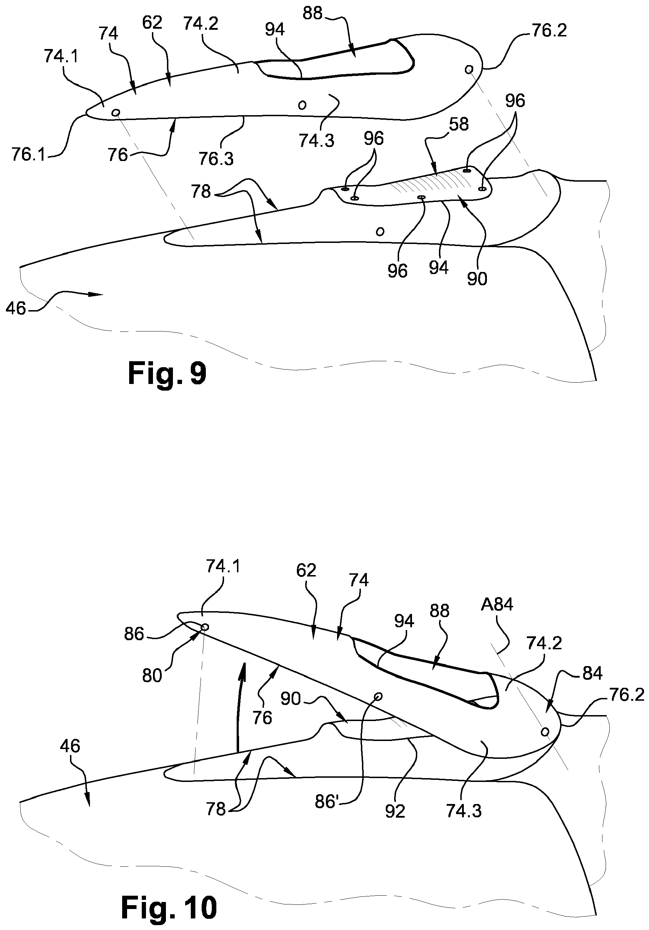

La coiffe 62 est configurée pour occuper une position fermée, visible sur la figure 6, dans laquelle le bord périphérique 76 de la coiffe 62 et un bord périphérique 78 du carénage avant 50 et/ou de la nacelle 46 sont jointifs, et une position ouverte, visible sur les figures 9 et 10, dans laquelle le bord périphérique 76 de la coiffe 62 est, au moins partiellement, écarté du bord périphérique 78 du carénage avant 50 et/ou de la nacelle 46, autorisant ainsi un accès à l'intérieur du mât.

En complément de la coiffe 62, le carénage avant 50 comprend au moins un système de verrouillage 80 pour maintenir la coiffe 62 en position fermée.

Selon un premier mode de réalisation visible sur la figure 9, la coiffe 62 est, en position ouverte, totalement détachée du châssis 60. Selon cette première variante, en position ouverte, le bord périphérique 76 de la coiffe 62 est écarté du bord périphérique du carénage avant 50 et/ou de la nacelle 46 sur toute sa longueur.

Selon ce premier mode de réalisation, le système de verrouillage 80 comprend une pluralité de fixations démontables 82 reliant la coiffe 62 et le châssis 60 pour maintenir la coiffe 62 en position fermée.

Les fixations démontables 82 sont réparties sur le bord périphérique 76 de la coiffe 62.

Selon un deuxième mode de réalisation visible sur la figure 10, le carénage avant 50 comprend au moins une articulation 84 reliant en permanence la coiffe 62 et le châssis 60, ladite articulation 84 étant configurée pour faire pivoter la coiffe 62 par rapport au châssis 60 autour d'un axe de pivotement A84 entre les positions fermée et ouverte.

La coiffe 62 étant toujours reliée au châssis 60, même en position ouverte, les risques de perte de la coiffe 62 lorsqu'elle est démontée sont supprimés.

Selon une configuration, l'axe de pivotement A84 est orienté selon une direction horizontale, approximativement perpendiculaire à la direction longitudinale. L'axe de pivotement A84 est positionné à proximité du bord arrière 76.2 de la coiffe 62. Ainsi, en position ouverte (comme illustré sur la figure 10), le bord périphérique 76 est écarté du bord périphérique 78 du carénage avant 50 et/ou de la nacelle 46 sur une partie de sa longueur (correspondant au bord avant 76.1, aux bords latéraux droit et gauche 76.3 et 76.4).

Selon ce deuxième mode de réalisation, le carénage avant 50 comprend deux articulations 84 positionnées sur le bord arrière 76.2 de la coiffe 62 au niveau des portions latérales droite et gauche 74.3 et 74.4.

Selon ce deuxième mode de réalisation, le système de verrouillage 80 comprend au moins une fixation démontable 86, reliant la coiffe 62 et le châssis 60, pour la maintenir en position fermée.

Selon une configuration, le système de verrouillage 80 comprend au moins une première fixation démontable 86 à proximité du bord avant 76.1, au moins une deuxième fixation démontable 86' à proximité du bord latéral droit 76.3 et au moins une troisième fixation démontable 86" (visible sur la figure 8) à proximité du bord latéral gauche 76.4. Les deuxième et troisième fixations démontables 86' et 86" sont positionnées approximativement à équidistance des bords avant et arrière 76.1 et 76.2.

Selon une configuration, la portion supérieure 74.2 de la coiffe 62 comprend une ouverture 88 au droit de la grille d'aération 58.

Selon cette configuration, le carénage avant 50 comprend un panneau supérieur 90, indépendant de la coiffe 62, qui présente la grille d'aération 58 et qui est fixé sur le châssis 60 par des fixations 92.

Ce panneau supérieur 90 a des formes coopérant avec l'ouverture 88 de la coiffe 62 de sorte que lorsque la coiffe 62 est en position fermée, le bord périphérique 92 du panneau supérieur 90 est recouvert par le bord périphérique 94 de l'ouverture 88 de la coiffe 62 de manière à assurer une continuité entre la coiffe 62 et le panneau supérieur 90.

Pour maintenir le bord périphérique 94 de l'ouverture 88 de la coiffe 62 plaqué contre le bord périphérique 92 du panneau supérieur 90, le carénage avant 50 comprend au moins une fixation démontable 96 positionnée au niveau du bord périphérique 94 de l'ouverture 88 de la coiffe 62. Plusieurs fixations démontables 96 (visibles sur la figure 6) peuvent être prévues, réparties sur le bord périphérique 94 de l'ouverture 88.

Selon cette configuration, le panneau supérieur 90 est toujours solidarisé au châssis 60 lorsque la coiffe 62 est en position ouverte. Ainsi, le conduit débouchant au niveau de la grille d'aération 58 est toujours obturé par la grille d'aération 58, même lorsque la coiffe 62 est en position ouverte.

Selon un mode de réalisation, les fixations démontables 82, 86, 86', 86" et 96 sont des vis. Toutefois, l'invention n'est pas limitée à ce mode de réalisation. D'autres solutions sont envisageables pour le système de verrouillage 80 permettant de maintenir la coiffe 62 en position fermée.

L'invention procure les avantages suivants :
Le fait de prévoir une unique pièce à la place d'une multitude de panneaux permet d'améliorer l'aérodynamique.

Cela permet également de réduire le nombre de fixations et donc la durée d'intervention pour accéder aux équipements positionnés sous le carénage avant 50.

Enfin, cette solution procure une meilleure accessibilité aux équipements positionnés sous le carénage avant 50 lorsque la coiffe 62 est retirée.

## Revendications

1. Carénage avant (50) d'un mât d'un aéronef, présentant une surface aérodynamique (S50) qui s'étend entre une nacelle (46) et une aile (48) de l'aéronef, à l'avant de l'aile (48), et qui comprend une zone avant courbe (52), une zone supérieure (54) dans le prolongement de la zone avant courbe (52) et deux zones latérales droite et gauche (56.1, 56.2) disposées de part et d'autre de la zone supérieure (54), ledit carénage avant (50) comprenant un châssis (60) et une coiffe (62), le carénage étant tel que :
- la coiffe (62) est une unique pièce, réalisée d'un seul tenant, sous la forme d'une paroi (74) qui comprend une portion avant (74.1), une portion supérieure (74.2), une portion latérale droite (74.3) et une portion latérale gauche (74.4) conformées respectivement comme la zone avant courbe (52), la zone supérieure (54) et les deux zones latérales droite et gauche (56.1, 56.2) de la surface aérodynamique (S50) du carénage avant (50) ;
- la coiffe (62) est configurée pour occuper une position fermée dans laquelle un bord périphérique (76) de la coiffe (62) et un bord périphérique (78) du carénage avant (50) et/ou de la nacelle (46) sont jointifs et une position ouverte dans laquelle le bord périphérique (76) de la coiffe (62) est au moins partiellement écarté du bord périphérique (78) du carénage avant (50) et/ou de la nacelle (46) ; et
- le carénage avant (50) comprend au moins un système de verrouillage (80) pour maintenir la coiffe (62) en position fermée,
**caractérisé en ce que** la portion supérieure (74.2) de la coiffe (62) comprend une ouverture (88) et **en ce que** le carénage avant (50) comprend un panneau supérieur (90), indépendant de la coiffe (62), solidaire du châssis (60), présentant une grille d'aération (58), le panneau supérieur (90) et la coiffe (62) ayant des formes qui coopèrent de manière à assurer une continuité entre la coiffe (62) et le panneau supérieur (90) lorsque la coiffe (62) est en position fermée.

2. Carénage avant d'un mât d'un aéronef selon la revendication 1, **caractérisé en ce que** la coiffe (62) est configurée pour être totalement détachée du châssis (60) en position ouverte.

3. Carénage avant d'un mât d'un aéronef selon la revendication 1, **caractérisé en ce que** le carénage avant (50) comprend au moins une articulation (84) reliant en permanence la coiffe (62) et le châssis (60), ladite articulation (84) étant configurée pour faire pivoter la coiffe (62) par rapport au châssis (60) autour d'un axe de pivotement (A84) entre les positions fermée et ouverte.

4. Carénage avant d'un mât d'un aéronef selon la revendication précédente, **caractérisé en ce que** l'axe de pivotement (A84) est orienté selon une direction horizontale, approximativement perpendiculaire à une direction longitudinale.

5. Carénage avant d'un mât d'un aéronef selon la revendication 4, **caractérisé en ce que** l'axe de pivotement (A84) est positionné à proximité d'un bord arrière (76.2) de la coiffe (62).

6. Carénage avant d'un mât d'un aéronef selon l'une des revendications précédentes, **caractérisé en ce que** le système de verrouillage (80) comprend une pluralité de fixations démontables (82) reliant la coiffe (62) et le châssis (60) pour maintenir la coiffe (62) en position fermée.

7. Aéronef comprenant un carénage avant (50) d'un mât selon l'une des revendications précédentes.
